# EUROPEAN PATENT APPLICATION

(11) **EP 1 162 815 A2**
(43) Date of publication of application: **12.12.2001**
(21) Application number: 01202171.3
(22) Date of filing: 07.06.2001
(51) Int. Cl.: H04M 3/56

(54) **Method and system for video telephony**

(30) Priority: 08.06.2000 US 210433 P; 15.08.2000 US 225464 P
(71) Applicant: Texas Instruments Incorporated, Dallas, Texas 75251 (US)
(72) Inventor: Milovanovic, Rajko, Plano Texas 75093 (US); Killian, Robert T., Dallas Texas 75248 (US)
(74) Representative: Holt, Michael

(57) **Abstract**

A method and apparatus is described for intelligently acquiring participants in a video telephony system by identifying human faces (101) in a bit map image from other objects and determine locations of the faces on the screen (102). The method then determines those to be included in the video conferencing by prompting for example and addressing a processor to move the camera to those locations (104-106).

## Description

### FIELD OF INVENTION

This invention relates to video telephony and more particularly to method and apparatus for acquisition of participants in a video telephony session.

### BACKGROUND OF INVENTION

Video telephony is becoming increasingly popular and lower in cost such that it's use is no longer limited to use by businesses for conferencing but also use between workstations and has promise for home use between families sitting in a living room. A video telephony system would include a station with a monitor such as a television set, a video camera a speaker phone circuit and a set top box or CPU for interfacing these elements with each other and with a communications network to permit the transmission and reception of voice and video. A video telephony communication is described for workstations is described for example in U.S. Patent No. 4,893,326 of Duran et al. entitled "Video-Telephone Communications System". This reference is incorporated herein by reference. The communications network may be by cable, telephone network, Internet, wireless, and/or satellite. The present invention relates to acquisition of participants in a video conferencing session. In other words how to tell the camera on top of the television set or monitor whom to focus on.

### SUMMARY OF INVENTION

In accordance with an embodiment of the present invention an improved method and system for acquisition of participants in a video telephony session comprises building a list of human participants and operating the camera move and focus by hopping from human to human.

### DESCRIPTION OF DRAWING

Preferred and exemplary embodiments will now be further described in detail by way of example only, and with reference to the figures of the accompanying drawings in which:
Fig. 1 is a block diagram of the system according to an embodiment of the present invention.
Fig. 2 is a flow chart of the operation in accordance with an embodiment of the present invention.
Fig. 3 is a block diagram of a system in accordance with other embodiments of the present invention.

### DESCRIPTION OF PREFERRED EMBODIMENTS

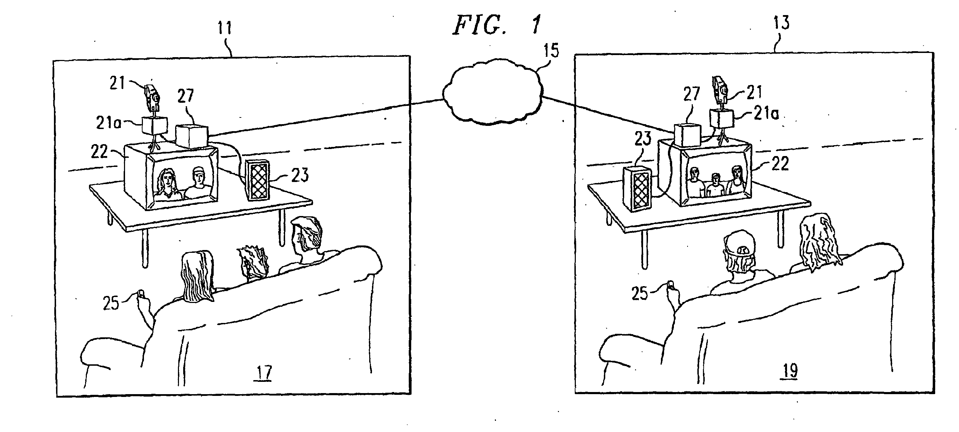

Referring to Fig. 1 there is illustrated an embodiment of the present invention with a pair of stations 11 and 13 connected by a transmission network 15 such as cable, telephone and Internet for sending the video and voice between stations 11 and 13. Each station 11 and 13 is in a space 17 and 19 which may be a living room. The station equipment includes a camera 21 on top of a monitor 22 such as a television set, a speaker phone circuit 23 (microphone 23a and speaker 23b), a remote control 25 and a computer processing unit (CPU) such as a set top box 27 for interfacing these elements with each other and with the communications network 15. The camera 21 would have a drive motor 21a for and moving the camera and/or camera lens to focus on objects in the room. The drive motor 21a would move in both horizontal and vertical directions as well as in and out to focus on the objects. The camera may be controlled by the remote control 25 via the computer process unit by a track ball, mouse or clicks by keyboard as part of the remote moving the screen up/down and left/right. This is not in accordance with a preferred embodiment of the present invention.

In order to prevent this cumbersome method an improved method and system is provided herein for hopping from human to human. The space 17 or 19 may be an enclosed or otherwise defined space such as a living room, conference room workstation room or even open air space with well defined camera view background. The space contains properties which include static objects such as furniture, plants and other static and distinct parts of the enclosure such as windows, doors, of that space during video conferencing.

The camera and processor build a static model of the space and static objects in it. This takes place as an invisible, background process relative to content being displayed on the television or monitor. This is a program in the CPU called for example "BUILD_STATIC_MODEL." Another program for displaying the static model called for example "DRAW_STATIC_MODEL"renders the full screen with the appliance on it and static object below it. Another program in the CPU is a default static object to provide a default background. The CPU includes a program called "LOCATE_PERSON(S) that locates the faces of person(s) in the space. The program called "DEFAULT_STATIC_OBJECT" sets the camera in a default position when being powered up. This may be for example the closest object along the cameras centerline. This can be for the example of the living room the center of the sofa in front of the television set or for a workstation the nominal chair location. The viewer can designate any static object. The objects further include the remote controller and persons taking part in the video telephony session and located in the space which contains the appliance or station equipment. The object may also be a "default person" who is the person located at (for the example sitting on) the default static object. The objects are stored in the memory of CPU and called upon by the CPU.

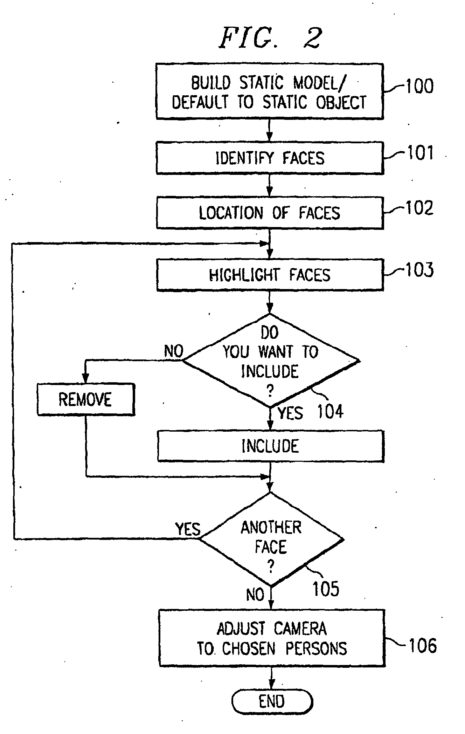

In accordance with one embodiment of the present invention the system builds a static model by periodically scanning the space and the static objects as indicated by step 100. When the camera is powered up, the closest object is usually selected to be an object along the camera's centerline as a start reference point and is also part of step 100. The program in the CPU identifies the human faces from the camera's overall bit image as illustrated in step 101 in Fig. 2. The users images may be on an object file and compared with the bit map to identify whom is on the screen. The system includes the program that identifies the locations of the faces on the screen as illustrated in step 102. An example of such software is as in Henry Rowley's face detection thesis described in http:/www.cs.cmu.edu/afs/cs.cmu.edu/user/har/Web/faces.html.
The system then prompts in step 104 the user to answer if the face is to be included in the video session by a message on the display or otherwise the query "Include in video session?" and highlighting (step 103) the face of the person the question is address. The system can begin by starting with the person closest to the nominal position in the room (orthogonal to the center of the television or monitor screen plane). By clicking a mouse or key on the keyboard "yes" or enter holder of the remote tells the CPU or set top box to include that person highlighted. The system then goes to the next object person and highlights the person at step 103 and queries again at step 104 if that person is to be included. The highlighting and prompting repeats until all faces are determined if they will be in the video conference. A done or escape key is pressed and the selection is finished. This is represented by step 105. Alternatively, a next or arrow key skips the current highlighted person and moves to highlight the next one, again with a prompt to the next person. The system is driven by the viewer's remote clicks on a TV screen - displayed picture and the software correlates the remote's cursor position on the screen with location of the faces shown on the screen. The camera then adjusts (zoom, pan and tilt) to include only those persons to thereby move from human to human. . The set of person can be changed or enlarged or cut down in size at any time during the videophone session.

In accordance with another embodiment software in the CPU or set top box identifies persons by name and not just faces. Each person's face is tagged on the screen with the CPU recorded name identified in a training session and is thereby identified by name instead of by just faces. Each person's face is tagged on the screen with the CPU recorded name. This is done in a training session for each family member for example after purchase of the equipment. The names are called out of the people to be included in the session.

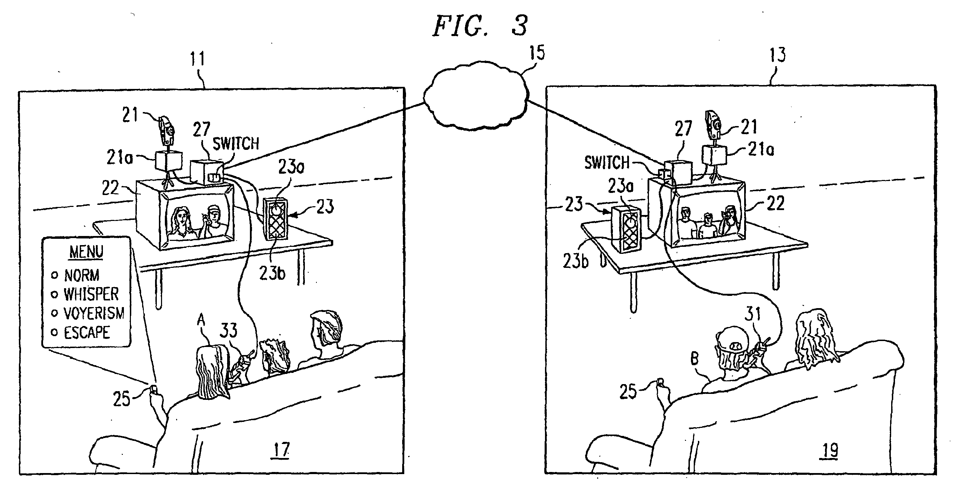

In accordance with another embodiment of the present invention, the system provides a private conversation with someone at the other end of the videophone. See Figure 3. This may be done in the "Whisper" mode. From a screen menu on the local end, at living room 11 for example, the user A desiring to go into the "Whisper mode" from the normal mode selects the "Whisper" mode on the remote 25 and designates a desired target person B in the living room 13 as the "Whisper" mode target by hopping from face to face as discussed above. This is done while the user A is viewing the other end of the link at the living room 13 for example. The face of that person A is either highlighted or the others are removed from the screen or otherwise indicated and then selected. The person is then selected as the "Whisper" mode target. The video camera 21 in room 13 then focuses on the target person B. The system performs an identification search. The whisper person's identification and contact address phone number may be preloaded in memory of box 27 and when the person is highlighted or selected a private telephone line number is made available. The videophone may be feature equipped with a set-top box 27 having Complete Telephony Integration (CTI) capabilities; i.e. the ability to dial POTS (Plain Old Telephone Service); and hook up videophone mike and speakers into a private telephone line. The system when in the "Whisper" mode and having designated the person automatically calls his or her cellphone or private line 31 and from his or her cellphone or private line 33 and diverts (switch) the user's videophone mike and speakers out of shared audio medium into private conversation toward the target's cellphone or private line off the set-top box. At any time the user desires to end the conversation on the "whisper mode" an escape key on the remote 25 is provided to return to the normal mode. The escape also happens if the remote target hangs up on his or her cellphone or private line.

In accordance with another embodiment a private view at whom I want without notice. This may be provided in the voyeurism mode. This may also be selected by the remote 25. As discussed above the capabilities are used to designate target person by hopping from face to face as discussed above such as by highlighting when viewing the other end of the link at the living room 13 in the example. The camera 21 at the other end (room 13) zooms and focuses on the designated target person (B in the example). This zooming can be done by "solid state" zooming so the motion of the camera will not be present to both the target person. Another alternative may be is the mechanical servo cam, etc. is hidden behind an opaque and static glass screen. If the remote end has a small picture-within-a-picture of local user's view the user's camera (camera 21 in room 11 for the example) may output a freeze frame of the previous (before voyeurism selection) global view of all the others at the remote end. An escape from the voyeurism is provided by keying the remote 25.

## Claims

1. A method of acquisition of participants in a video telephony session comprising the steps of:
building a visual enumeration list of humans in the video telephony session for the camera to focus on;
determining locations of the humans; and
controlling the camera to hop directly from human to human.

2. The method of Claim 1 wherein said building step includes highlighting a human and prompting users to identify if that human is to be included.

3. The method of Claim 1 wherein each person's face is tagged in a training session and the humans to be included are called out or otherwise determined by the tag.

4. The method of any preceding claim wherein the locations of the human faces are determined and stored.

5. The method of any preceding claim wherein the building step includes comparing a stored bit map of the faces of participants with a received bit map from the camera and the locating step determines the locations of the faces in the image.

6. The method of any preceding claim wherein the camera includes a drive circuit responsive to the stored locations for driving the camera to focus on the faces.

7. The method of any preceding claim including the step of designating a target person in a whisper target mode, and diverting videophone mike and speakers out of shared audio to private conversation.

8. The method of Claim 7 including the step of automatically calling designated person's private phone when designating a target person as the whisper target.

9. The method of Claim 8 wherein the designated target person's cellphone is called.

10. The method of Claim 7 wherein said designating step includes highlighting the target person on the video screen.

11. The method of Claim 7 wherein said designating step includes removing all other humans on the screen but the target person.

12. The method of Claim 7 including the step of escaping from the whisper mode using a remote.

13. The method of any preceding claim including the step of a voyeurism mode designating a target person for viewing without notice.

14. The method of Claim 13 wherein said camera on the other end zooms on the target person for viewing.

15. The method of Claim 13 wherein the target person's view of user's view only has a freeze frame view of user's view before going into the voyeurism mode.

16. The method of Claim 13 including the step of escaping from the voyeurism mode using a remote.
